# EUROPÄISCHE PATENTSCHRIFT

(11) **EP 1 927 389 B1**
(45) Veröffentlichungstag und Bekanntmachung des Hinweises auf die Patenterteilung: **30.03.2011**
(21) Anmeldenummer: 07020365.8
(22) Anmeldetag: 18.10.2007
(51) Int. Cl.: B01D 29/19, B01D 29/05, B01D 29/64

(54) **Filtervorrichtung**
Filter device
Dispositif de filtre

(30) Priorität: 25.10.2006 DE 102006050127
(43) Veröffentlichungstag der Anmeldung: 04.06.2008
(73) Patentinhaber: ETS Trade S.a.r.l., 633 Wasserbillig (LU)
(72) Erfinder:
(74) Vertreter: Maxton Langmaack & Partner

(56) Entgegenhaltungen:
- EP-A- 0 247 445
- WO-A-89/04204
- DE-A1- 4 239 664
- DE-B- 1 163 292

## Beschreibung

Die vorliegende Erfindung betrifft eine Filtervorrichtung zur Reinigung insbesondere eines flüssigen und/oder gasförmigen Mediums, sowie ein in dieser Filtervorrichtung einsetzbaras Filterelement als auch ein Verfahren zur Reinigung eines Mediums und ein Verfahren zur Entfernung eines sich in der erfindungsgemäßen Filtervorrichtung absetzenden Filterkuchens.

Filtervorrichtungen zur Reinigung von flüssigen und/oder gasförmigen Medien beziehungsweise entsprechenden Gemischen, einschließlich auch hochviskosen und öligen Medien, sind vielfältig aus dem Stand der Technik bekannt. Besonders problematisch bei den aus dem Stand der Technik bekannten Filtervorrichtungen ist die Entfernung des sich auf einem in diesem enthaltenen Filterelement absetzenden Filterkuchens beziehungsweise dort aufgenommenen Schmutzes. Hierzu schlägt die US 7,055,699 B2 einen selbstreinigenden mechanischen Filter vor, wobei in die dort offenbarte Filtervorrichtung eine Reinigungsvorrichtung integriert ist, welche Saug- und Waschdüsen aufweist, welche gegenüberliegend angeordnet sind, und wobei die Saugdüsen unmittelbar auf dem Filterelement anliegen, und zur Entfernung des Filterkuchens die Saugdüsen und die Waschdüsen synchron in axialer und radialer Richtung auf dem Filterelement bewegt werden. Die in der US 7,055,699 B2 offenbarte Reinigung der Filtervorrichtung ist sehr aufwändig und bedarf einer komplexen Steuerung, Zudem ist aufgrund der Bewegung sowohl in axialer als auch in radialer Richtung ein relativ hoher mechanischer Aufwand zu treiben, der die dort offenbarte Filtervorrichtung relativ kostenspielig macht.

Des Weiteren ist eine gattungsgemäße Filtervorrichtung offenbart in der WO 2006/008729 A1, wobei dort zur Entfernung eines Filterkuchens auf einem Filterelement in einer Filtervorrichtung insbesondere ein Reinigungskopf mit einer Düse definiert wird, welcher unmittelbar auf dem Filterelement anliegt und über welchen aufgrund einer sich bei der Reinigung aufbauenden Druckdifferenz der Filterkuchen von dem Filterelement abgesaugt wird. Damit die dort offenbarte Filtervorrichtung einwandfrei arbeitet, ist es jedoch notwendig, stets den Reinigungskopf der Reinigungsvorrichtung unmittelbar anliegend dem Filterelement zu führen, so dass schon bereits bei leichten Unebenheiten, welche insbesondere bei längerem Gebrauch der Filtervorrichtung in den Filterelementen beziehungsweise deren Oberflächen auftreten, eine nicht mehr hinreichende Druckdifferenz zur Reinigung aufgebaut werden kann.

DE 42 39 664 A1 offenbart einen Filter mit mindestens einem in einem Filtergehäuse angeordneten Spaltfilterelement bestehend aus einem Stützkörper und an dem Stützkörper angeordneten Filterelement, welches aus wenigstens einem Teil besteht, dass mit Spalten oder Durchbrüchen versehen ist. Sowohl der Stützkörper als auch das Filterelemente bestehen aus einem Glaswerkstoff.

Aufgabe der vorliegenden Erfindung ist es daher, eine Filtervorrichtung zur Verfügung zu stellen, deren Filtermaterial bzw. deren Filterelement(e) sich aufgrund des Aufbaus der Vorrichtung besonders gut und einfach reinigen lässt, und zudem effektiv ein zu reinigendes Medium, gleich ob dieses gasförmig, flüssig oder ein wie auch immer geartetes Gemisch darstellt, reinigt.

Diese Aufgabe wird gelöst durch eine Filtervorrichtung mit einem Gehäuse mit mindestens einem in diesem angeordneten zylindrischen Filterelement, umfassend mindestens ein Filtermaterial, ausgewählt aus einer Gruppe umfassend Vliese, fasern, Gewebe und/oder Garne, und mindestens ein Abprallelementmit einer strukturierten Oberfläche mit mindestens zwei, in Richtung einer Längsachse L des Abprallelementes gesehen, zueinander parallel verlaufenden, ausgehend von einem Flansch in einem Kopfbereich des Filterelementes zu einem zweiten Flansch in einem Fußbereich verlaufend ausgebildeten und kurz vor beziehungsweise am Kopf- und/oder Fußbereich des Abprallelementes endenden Vertiefungen und mit einer Reinigungsvorrichtung, umfassend mindestens eine Düse, welche zur Entfernung eines Filterkuchens auf dem Filtermaterial mittels eines Reinigungsmediums senkrecht und/oder winklig, bezogen auf das Filterelement, ausrichtbar ist, wobei zur Reinigung das Reinigungsmedium das Filtermaterial zumindest teilweise durchdringt, und das Abprallelement das Reinigungsmedium zumindest teilweise ablenkt zum erneuten Durchtritt durch das Filtermaterial bei gleichzeitig zumindest teilweiser Entfernung des Filterkuchensdadurch gekennzeichnet, dass Öffnungen im durch den Flansch und den zweiten Flansch gebildeten Kopf- und/oder Fußbereich auf die Oberfläche des Abprallelementes im Bereich einer Verlängerung mindestens einer der Vertiefungen angeordnet sind. Vorteilhafterweise ist genau eine Düse beziehungsweise Düsenblock einem Filterelement zugeordnet.

Die erfindungsgemäße Filtervorrichtung weist den großen Vorteil auf, dass durch die spezifische Ausbildung des Filterelementes mit mindestens einem Abprallelement eine sehr effektive Entfernung des sich auf mindestens einem Filtermaterial abscheidenden Filterkuchens erfolgt, wobei gleichzeitig Saugdüsen, wie aus dem eingangs genannten Stand der Technik bekannt, nicht vorgesehen sind. Die erfindungsgemäße Filtervorrichtung kann daher erheblich kostengünstiger bei gleich guter Reinigungsleistung und ebenso effektiver Entfernung des Filterkuchens hergestellt werden. Durch die Aufgabe des Reinigungsmediums über die mindestens eine Düse senkrecht und/oder winklig, bezogen auf das Filterelement, kann eine individuelle und effektive Entfernung des Filterkuchens, abgestimmt auf die spezifischen Eigenschaften des zu reinigenden Mediums und unter Berücksichtigung des Gesamtaufbaus der Filtervorrichtung, folgen. Die mindestens eine Düse kann dabei insbesondere auch bewegbar und/oder einzein ansteuerbar ausgebildet sein. Vorzugsweise weist die Reinigungsvorrichtung mindestens eine Düsenreihe oder aber ein Düsenfeld auf. Jede der einzelnen Düsen einer derartigen Düsenreihe oder Ausbildungen des Düsenfeldes kann dabei bewegbar ausgebildet sein, und auch getrennt angesteuert werden, es sind jedoch auch beliebige Kombinationen mit feststehenden Düsen oder ausschließlich mit feststehenden Düsen denkbar. Sind dabei die Düsen senkrecht auf das Filterelement ausgerichtet, trifft das Reinigungsmedium senkrecht auf mindestens ein Filtermaterial des Filterelementes, durchdringt dieses, wobei nachfolgend dann das Reinigungsmedium von der Oberfläche des Abprallelementes um etwa 180 Grad, abhängig von dem eingesetzten Filtermaterial und dessen Ablenkung des Reinigungsmediums sowie der Oberfläche des Abprallelementes, reflektiert wird, wobei dann nachfolgend das Reinigungsmedium wiederholt das Filtermaterial durchdringt und dabei den Filterkuchen zumindest teilweise klärt beziehungsweise Schmutz aus dem Filterelement zumindest teilweise herausspült.

In einer alternativen Ausführung hierzu sind die Düsen in einem Winkel von bevorzugt etwa 5 bis etwa 85 Grad, bezogen auf das Filterelement beziehungsweise dessen Oberfläche, ausgerichtet, so dass das Reinigungsmedium in einem entsprechenden Winkel auf das Filtermaterial des Filterelementes auftrifft, das Filtermaterial durchdringt und anschließend in einem dem Aufprallwinkel mehr oder weniger entsprechenden Winkel, in Abhängigkeit von dem eingesetzten Filtermaterial, von der Oberfläche des Abprallelementes reflektiert wird. Das solchermaßen reflektierte Reinigungsmedium durchdringt wiederum das Filtermaterial und entfernt den Schmutz beziehungsweise Filterkuchen, welcher auf beziehungsweise in dem Filtermaterial des Filterelementes aufgenommen ist beziehungsweise sich abgesetzt hat. Eine derartige winklige Anordnung der Düsen in Bezug auf die Oberfläche des Filterelementes ist insbesondere dann vorteilhaft, wenn in einer bevorzugten Ausführungsform die Reinigungsvorrichtung bewegbar ausgebildet ist, so dass in Bewegungsrichtung das Reinigungsmedium winklig auf das Filterelement und das Filtermaterial aufgegeben werden kann, wodurch insbesondere die Entfernung des mit dem Schutz beziehungsweise Filterkuchen verunreinigten Reinigungsmediums aus der Filtervorrichtung erleichtert und insbesondere auch beschleunigt wird.

In einer weiteren alternativen Ausführungsform kann die Reinigungsvorrichtung auch sowohl senkrecht als auch winklig in Bezug auf die Oberfläche eines Filterelementes ausgerichtete Düsen aufweisen, wobei beispielsweise bei einer Anordnung in Form einer Düsenreihe auch zunächst eine Düsenreihe vorgesehen sein kann, welche das Reinigungsmedium senkrecht auf das Filterelement aufgibt, und nachfolgend eine Düsenreihe, welche winklig zur Oberfläche des Filterelementes, und insbesondere in Bewegungsrichtung bei einer bewegbaren Reinigungsvorrichtung, das Reinigungsmedium auf das Filterelement ausgibt. Selbstverständlich ist auch eine umgekehrte Anordnung denkbar. Im Sinne der vorliegenden Erfindung sind sämtliche möglichen Kombinationen von Anordnungen von Düsen in der Reinigungsvorrichtung als auch deren Ausrichtung im Hinblick auf das Filterelement umfasst

Das Reinigungsmedium tritt vorzugsweise unter Druck, und dabei bevorzugt mit einem Druck von mehr als 3 bar, weiter bevorzugt mit einem Druck von mehr als 5 bar, aus den Düsen der Reinigungsvorrichtung aus. Hierdurch wird die Reinigungswirkung erhöht und der Reinigungsschritt beschleunigt.

Erfindungsgemäß ist das Filterelement der Filtervorrichtung zylindrisch ausgebildet. Dabei kann die Reinigungsvorrichtung insbesondere auch mehrere, das heißt mindestens zwei, zylindrisch ausgebildete Filterelemente aufweisen. Zylindrische Filterelemente können vorzugsweise als Einzelstück oder in Zweier-, Dreier- oder Vierergruppen oder Gruppen mit einem Vielfachen der vorgenannten Gruppen in einer Filtervorrichtung aufgenommen sein können. Vorteilhafterweise ist dabei einem zylindrisch ausgebildeten Filterelement eine Düse beziehungsweise ein Düsenblock zugeordnet, wobei weiter bevorzugt das Filterelement bewegbar ausgebildet ist. Aber auch jede sonstige Ausgestaltung der Filterelemente im Sinne der vorliegenden Erfindung ist möglich.

Als Abprallelement kann ein Teilbereich einer Oberfläche des Filterelementes dienen. Das Abprallelement des Filterelementes der Filtervorrichtung kann als Abprallblech ausgebildet sein, insbesondere in jeder denkbaren und den Gegebenheiten angepassten Form, beispielsweise quaderförmig, zylinderförmig oder aber auch kugelförmig. Das Abprallelement kann dabei Öffnungen zum Durchtritt des gereinigten Filtrates aufweisen.
Im Sinne der vorliegenden Erfindung können auch mehrere Abprallelemente, nebeneinander, hintereinander oder teilweise überlappend, vorgesehen sein. Besonders bevorzugt ist das Abprallelement gebildet durch ein Filtergehäuse, welches mit dem mindestens einen Filtermaterial zumindest teilweise umgeben beziehungsweise angeordnet ist. Das Filtergehäuse kann dabei hohl und/oder massiv ausgebildet sein. Das Filtergehäuse selbst kann insbesondere in einem Kopf- und/oder Fußbereich desselben angeordnete Auslässe zur Ableitung des gereinigten Filtrates aufweisen, Flansche zur Befestigung im Inneren einer Filtervorrichtung zur Erzielung eines sicheren Haltes in dieser sowie sonstige notwendige Mittel und Elemente aufweisen. Beispielsweise kann das Abprallelement gebildet sein aus einem zumindest teilweise hohlen Zylinder, wobei der Zylinder an einem oder aber beiden Enden offen sein kann zur Ableitung des gereinigten Filtrates. Auf der Ober- oder Umfangsfläche des Zylinders ist dann das Filtermaterial angeordnet, zumindest in Teilbereichen derselben. Des Weiteren ist in dem aus dem Zylinder gebildeten Filtergehäuse mindestens eine Öffnung vorgesehen, durch welche das Filtrat in das Innere eintreten kann und bevorzugt über die Kopf- beziehungsweise Fußbereiche angeordneten Auslässe aus der erfindungsgemäßen Filtervorrichtung hinausgeführt wird.

Besonders bevorzugt ist die Oberfläche des Abprallelementes zumindest teilweise strukturiert ausgebildet. Durch die Strukturierung der Oberfläche des Abprallelementes wird vorteilhafterweise einerseits ein erleichterter und insbesondere auch beschleunigter Abfluss des gereinigten Filtrates, insbesondere auch gezielt zu am Filterelement vorgesehenen Öffnungen hin, erreicht, und des Weiteren auch bei der Reinigung der Filtervorrichtung das unter Druck auftreffende Reinigungsmedium in unterschiedlichen Winkeln reflektiert beziehungsweise gestreut, wodurch eine Steigerung der Reinigungswirkung erzielt wird. Die Struktur der Oberfläche des Abprallelementes kann jede nur erdenkliche Ausbildung haben, beispielsweise kann die Oberfläche einfach punkt- oder liniengeprägt sein, oder aber beispielsweise wellenförmig ausgebildet sein. Vorzugsweise weist die Oberfläche eine Struktur auf, gebildet aus mindestens zwei parallel zueinander verlaufenden Ver tiefungen, gesehen in Richtung einer Längsachse L des Abprallelementes. Zwischen den Vertiefungen sind bevorzugt Erhebungen, insbesondere rippenartig ausgebildete, angeordnet, Die Erhebungen können, wenn sie linienförmig ausgebildet sind, auch Unterbrechungen aufweisen, so dass von einer Vertiefung zur benachbarten Vertiefung das zu reinigende Medium gelangen kann. Unterbrechungen können dabei in Bezug auf benachbarte Erhebungen versetzt oder ohne Versetzung angeordnet sein. Insbesondere können auch Erhebungen dergestalt auf der Oberfläche des Abprallelementes angeordnet sein, dass sich durchgehende linien-, insbesondere rippenförmige Erhebungen mit unterbrochenen Erhebungen abwechseln.Das Filtermaterial liegt auf den Erhebungen an, so dass das Filtrat über die Vertiefungen zu Öffnungen geleitet und ablaufen kann. Die Vertiefungen sind vorzugsweise als Rillen ausgebildet, welche kurz vor beziehungsweise am Kopf- und/oder Fußbereich des Abprallelementes, insbesondere bei Ausbildung als Filtergehäuse, enden. Die Rillen können dabei über ihre gesamte Länge eine gleichmäßige, aber auch eine unterschiedliche Tiefe, beispielsweise auch ein Gefälle insbesondere zu einer Öffnung hin, aufweisen. In den Vertiefungen können Öffnungen, bevorzugt mindestens je zwei Vertiefungen, vorgesehen sein.

In einer weiter bevorzugten Ausführungsform weist die Oberflächenstruktur des Abprallelementes mindestens eine schräg zu der Längsachse L verlaufende Vertiefung auf, welche ebenfalls vorzugsweise als Rille ausgebildet ist. Dabei können diese schräg verlaufenden Vertiefungen auch mit parallel verlaufenden Vertiefungen kombiniert sein. Die Vertiefungen sind dabei vorzugsweise gleichmäßig über die gesamte mit dem Filtermaterial umgebene Oberfläche des Abprallelementes ausgebildet. Ist nur ein Teil des Abprallelementes mit einem Filtermaterial umgeben, ist die Vorsehung entsprechender Strukturen nur im Bereich der Auflage des Filtermateriales notwendig.

Vorzugsweise bei einer flächigen und blockartigen Ausbildung des Abprallelementes in Form eines Filtergehäuses verläuft dabei die mindestens eine schräg zu der Längsachse L angeordnete Vertiefung derart, dass diese in unmittelbarer Nähe beziehungsweise im Kopf- und/oder Fußbereich des Filtergehäuses endet. Das entgegengesetzte Ende der entsprechend schräg verlaufenden Vertiefungen kann dabei in einer Längsseite des flächigen blockartigen Filtergehäuses enden. Entsprechend können die schräg verlaufenden Vertiefungen auf einem zylindrisch ausgebildeten Filterkörper angeordnet sein. Die schräg verlaufenden Vertiefungen können dabei geradlinig ausgebildet sein, jedoch auch radial, beispielsweise viertelkreisförmig. Aber auch jede andere zumindest in Teilbereichen schräg, das heißt winklig, der Längsachse L verlaufende Ausbildung der Vertiefung ist im Sinne der vorliegenden Erfindung vorteilhaft. Enden die schrägverlaufenden Vertiefungen in der Nähe beziehungsweise am Kopf- und/oder Fußbereich des Abprallelementes, sollten bevorzugt dort Öffnungen zum Durchtritt des gereinigten Filtrates vorgesehen sein, da hier durch die spezifische Oberflächenstruktur des Abprallelementes das Filtrat durch die Vertiefungen auf die Öffnung(en) hin transportiert wird. Die Öffnungen können punktförmig, kreisförmig, schlitzförmig, aber auch jede andere Ausbildung aufweisen. Es kann insbesondere auch vorgesehen sein, dass Öffnungen auch über die sonstige Oberfläche des Abprallelementes verteilt angeordnet sind, insbesondere in den Vertiefungen der Oberfläche des Abprallelementes.

Je nach Ausbildung des Abprallelementes kann dieses auf einer, aber auch auf beiden Seiten eine zumindest teilweise strukturierte Oberfläche aufweisen. Bei zylindrischen Ausbildung des Abprallelementes, insbesondere als Teil eines Filtergehäuses, ist vorzugsweise die gesamte Oberfläche bei einem zylindrisch ausgebildeten Abprallelement, mit einer Oberflächenstruktur im Bereich des anliegenden Filtermateriales versehen.

Das Filtermaterial ist erfindungsgemäß ausgewählt aus einer Gruppe umfassend Vliese, Fasern, Gewebe und/oder Garne. Dabei können insbesondere auch Kombinationen unterschiedlicher Filtermaterialien, auch zur Erzeugung eines Filtrations-Gradienten im Filterelement, vorgesehen sein. Besonders bevorzugt im Sinne der vorliegenden Erfindung wird als Filtermaterial ein Garn eingesetzt, welches aus einem oder mehreren feinen/dünnen Einzelfilamenten besteht. Mindestens ein Garn wird bevorzugt als Filtermaterial eingesetzt, da im Filter- und Reinigungsvorgang die Garne vibrieren und hierdurch die Filtrierung einerseits, aber auch die Reinigung durch eine erleichterte Entfernung des Filterkuchens unterstützt wird. Das Garn ist vorzugsweise texturiert ausgebildet, wodurch erheblich mehr Schmutzpartikel abgefangen werden. Vorzugsweise weisen die Einzelfilamente des Garns einen Durchmesser von bis zu etwa 1 mm, bevorzugt bis zu etwa 0,5 mm, noch weiter bevorzugt bis etwa 0,01 mm, auf. Das Garn, aber auch andere Filtermaterialien, werden dabei bevorzugt in mindestens zwei, weiter bevorzugt in mehr als zwei Lagen, eingesetzt. Hierdurch kann eine Tiefenfiltration des zu reinigenden Mediums bei hoher Reinigungswirkung erfolgen. So können sehr reine Filtrate erhalten werden, gleich ob gasförmig oder flüssig. Die erfindungsgemäße Reinigungsvorrichtung verbindet die Arbeitsweise eines Kantenspaltfilters mit derjenigen eines Tiefenfilters.

Vorzugsweise ist die Reinigungsvorrichtung schlittenartig ausgebildet. Die Reinigungsvorrichtung umfasst die mindestens eine Düse, welche vorteilhafterweise an einem Düsenblock angeordnet ist. An diesem Düsenblock können mehrere Düsen insbesondere auch in einer Düsenreihe zusammen, oder aber als Düsenfeld angeordnet sein. Die Reinigungsvorrichtung kann auch einen zylindrisch ausgebildeten Düsenblock mit darauf angeordneten Düsen umfassen. Die Reinigungsvorrichtung kann dabei vorzugsweise hydraulisch, elektrisch oder mechanisch, beziehungsweise über eine Verzahnung, beispielsweise ein Schneckenrad, angetrieben werden. Alternativ kann auch vorgesehen sein, dass die Reinigungsvorrichtung feststehend ausgebildet ist, und die Filterelemente bewegt werden. Dies ist insbesondere vorteilhaft bei einer zylindrischen Ausbildung der Filterelemente. Vorzugsweise ist jedem einzelnen im Gehäuse aufgenommenen Filterelement mindestens eine Düse zugeordnet. Hierdurch kann die Reinigungsleistung weiter gesteigert werden. Bei einer alternativen Ausgestaltung mit flächigen Filterelementen kann jeder mit einem Filtermaterial versehenen Seite des Filterelementes ein Düsenblock, insbesondere mit einer Düsenreihe, zugeordnet sein. Alternativ können die Düsenblöcke auch bei in mehreren Reihen nebeneinander oder anderweitig angeordneten Filterelementen mehrere in unterschiedliche Richtungen weisende Düsen aufweisen, die mehrere Filterelemente insbesondere gleichzeitig reinigen. Bei einem flächigen Filterelement mit auf beiden Seiten angeordnetem Filtermaterial können sich gegenüberliegende Düsenblöcke, welche sich über die gesamte Längsrichtung des Filtermateriales erstrecken, einem oder mehreren Filterelementen, insbesondere bei in mehreren Reihen angeordneten Filterelementen, zugeordnet sein, und bei der Reinigung des bzw. der Filterelemente zur Entfernung des Filterkuchens beziehungsweise des Schmutzes auf beziehungsweise in diesen über die gesamte Oberfläche des einen oder der mehreren Filterelemente verfahren werden. Es kann auch vorgesehen sein, dass mindestens zwei Filterelementen mindestens eine Düse zugeordnet ist. Dies kann beispielsweise dann der Fall sein, wenn der Düsenblock mit der mindestens einen Düse drehbar ausgebildet ist, insbesondere bei Verwendung von zylinderförmigen Filterelementen, oder die Filterelemente selbst drehbar ausgebildet sind.

Ist das Filterelement erfindungsgemäß zylindrisch ausgebildet, so sind vorzugsweise die Filterelemente bewegbar, und die Reinigungsvorrichtung in Form eines zylindrischen Düsenblockes mit angeordneten Düsen feststehend, wobei diese auch beweglich ausgebildet sein kann. Sind beispielsweise vier Filterelemente in einer Gruppe etwa auf einer quadratischen Grundfläche zusammen angeordnet, kann in der Mitte zwischen dieser ein zylindrisch ausgebildeter Düsenblock angeordnet werden, welcher ausgerichtet auf jedes der vier Filterelemente jeweils eine Düsenreihe aufweist. Durch die Drehung der Filterelemente, beispielsweise über eine Verzahnung, insbesondere ein in einem Auslassbereich angeordneten Schneckenrad, alternativ aber auch durch Druckluft oder hydraulisch, bei beispielsweise feststehendem, zylindrischem Düsenblock kann hierdurch eine Reinigung der gesamten Oberfläche des Filtermaterials eines zylindrisch ausgebildeten Filterelementes erzielt werden. Es kann jedoch auch der Düsenblock nur eine Düsenreihe aufweisen und drehbar ausgebildet sein.

Mindestens eine Öffnung in zylindrisch ausgebildeten Filterelementen kann an jeder Stelle der Oberfläche des mit Filtermaterial bedeckten Bereiches angeordnet sein, insbesondere auch an einem Kopf- und/oder Fußbereich des mit Filtermaterial bedeckten Abprallelementes. Die Öffnungen können in jeder möglichen Form ausgebildet sein, beispielsweise mit einem runden oder eckigen, Öffnungsquerschnitt, schlitzartig etc.

Die vorliegende Erfindung betrifft weiterhin ein Filterelement, umfassend mindestens ein Abprallelement und mindestens ein Filtermaterial, wobei das Abprallelement eine zumindest teilweise strukturierte Oberfläche aufweist. Im Übrigen weist das erfindungsgemäße Filterelement die bereits vorstehend wiedergegebenen vorteilhaften Ausbildungen, insbesondere betreffend die Oberflächenstruktur, auf.

Schließlich betrifft die vorliegende Erfindung ein Verfahren zur Entfernung eines auf mindestens ein erfindungsgemäßes Filterelement umfassend mindestens ein Filtermaterial, ausgewählt aus einer Gruppe umfassend Vliese, Fasern, Gewebe und/oder Garne, und mindestens ein Abprallelement, abgesetzten Filterkuchens beziehungsweise aufgenommenen Schmutzes in einer Filtervorrichtung, wobei über mindestens eine Düse einer Reinlgungsvorrichtung ein Reinigungsmedium senkrecht und/oder winklig, bezogen auf eine Oberfläche des Abprallelementes, auf das Filterelement gerichtet wird, das Reinigungsmedium das mindestens ein Filtermaterial durchdringt, auf dem Abprallelement zumindest teilweise abprallt und bei erneutem Durchtritt durch das Filtermaterial den Filterkuchen zumindest teilweise entfernt, dadurch gekennzeichnet, dass Öffnungen im durch den Flansch und den zweiten Flansch gebildeten Kopf- und/oder Fußbereich auf der Oberfläche des Abprallelementes im Bereich einer Verlängerung mindestens einer der Vertiefungen angeordnet sind. Die Begriffe Filterkuchen und/oder Schmutz, welcher sich auf beziehungsweise im Filterelement absetzt, sind im Sinne der vorliegenden Erfindung synonyme Begriffe.

Vorzugsweise wird die Reinigungsvorrichtung bei Abgabe des Reinigungsmediums bewegt, in einer alternativen Ausführungsform wird bei Abgabe des Reinigungsmediums das mindestens eine Filterelement bewegt. Aber auch Kombinationen dieser beiden Ausgestaltungen sind möglich. Das Reinigungsmedium ist dabei vorzugsweise ein flüssiges und/oder gasförmiges Medium, und kann insbesondere auch Gemische aus flüssigen, gasförmigen oder flüssigen und gasförmigen Medien darstellen. Dabei wird das Reinigungsmedium im Hinblick auf die Eigenschaften des zu reinigenden Mediums ausgewählt. Dies kann beispielsweise Wasser, Druckluft, Sauerstoff, Ammoniak, ein aliphatischer Kohlenwasserstoff oder aber ein Kohlenwasserstoffgemisch, Benzin oder Ähnliches sein. Aber auch das Vor- und Nachreinigungsmedium werden in Hinblick auf die Gegebenheiten ausgewählt. Bei einer Reinigung eines gasförmigen Gemisches durch die Filtervorrichtung wird bevorzugt ein flüssiges Reinigungsmedium verwendet, welches den Filterkuchen/Schmutz aus dem Filtermaterial herausspült. Im Falle der Filtration eines flüssigen Mediums mit der erfindungsgemäßen Filtervorrichtung wird vorzugsweise als Reinigungsmedium das gereinigte Medium selbst eingesetzt.

Vorteilhafterweise wird vor der Zufuhr des Reinigungsmediums durch ein Vorreinigungsmedium das im Gehäuse der Filtervorrichtung noch anstehende restliche zu reinigende Medium ausgespült. Das Vorreinigungsmedium kann dabei über vorteilhafterweise eine getrennte Zufuhr der Filtervorrichtung zugeführt werden, und über einen Auslass, durch welchen auch das Reinigungsmedium aus der Filtervorrichtung ausströmt, ausgelassen werden. Es kann insbesondere vorteilhafterweise auch unter Druck in die Filtervorrichtung aufgegeben werden, wobei im Einlass dann vorteilhafterweise ein Ventil vorgesehen ist, Ober welches der Druck des zugeführten Vorreinigungsmediums genau kontrolliert werden kann. Entsprechende Ventile können auch vorgesehen werden am Einlass des Reinigungsmediums, aber auch des zu reinigenden Mediums, welches ebenfalls unter Druck der erfindungsgemäßen Filtervorrichtung zugeführt werden kann. Ebenso können auch die Auslässe für das gereinigte Filtrat und/oder das Reinigungs- beziehungsweise Vorreinigungsmedium mit einem vorzugsweise steuerbaren Ventil versehen sein. Aber auch jegliche andere Arten von Absperrvorrichtungen, beispielsweise Kugelhähne oder Ähnliches, sind denkbar. Durch den zusätzlichen Schritt der Zufuhr eines Vorreinigungsmediums wird vorteilhafterweise die nachfolgende Reinigung durch das Reinigungsmedium zeitlich verkürzt. Des Weiteren kann vorteilhafterweise nach der Reinigung mit dem Reinigungsmedium durch ein Nachreinigungsmedium das im Gehäuse der Filtervorrichtung noch anstehende restliche zu Reinigungsmedium ausgespült werden. Die Zufuhr kann dabei analog der Zufuhr für das Vorreinigungsmedium erfolgen, es können aber auch zusätzlich Zuführungen vorgesehen werden. Das Vor- und/oder Nachreinigungsmedium kann flüssig oder gasförmig, bevorzugt gasförmig, ausgebildet sein, und dabei auch eine Mischung unterschiedlicher Gase darstellen.

Vorzugsweise wird bei Verwendung eines garnförmigen oder sonstigen in einer Vorzugsorientierung ausgerichteten Filtermateriales das Reinigungsmedium parallel zur Wicklungs- beziehungsweise Vorzugsrichtung des Filtermaterials aufgegeben. Hierdurch erfolgt eine hochgradig effiziente Reinigung der erfindungsgemäßen Filtervorrichtung.

Vorteilhafterweise wird die Abprallwirkung und/oder der Abfluss des Reinigungsmediums durch das Abprallelement erhöht durch eine Strukturierung der Oberfläche desselben. Hierzu wird auf die Ausführungen weiter oben verwiesen. Die strukturierte Oberfläche des Abprallelementes ermöglicht somit einen erleichterten und schnelleren Abfluss nicht nur des gereinigten Filtrates, sondern auch des Reinigungsmediums und/oder des Vorreinigungsmediums.

Diese und weitere Vorteile der vorliegenden Erfindung werden anhand der nachfolgenden Figuren näher erläutert
- Fig. 1a:: Eine perspektivische Ansicht einer alternativenFiltervorrichtung ;
- Fig. 1b:: eine Seitenansicht einer Kopfseite der Filtervorrichtung gemäß Fig. 1a mit Teil- schnitten;
- Fig. 2:: eine teilweise aufgebrochene perspektivische Ansicht der Filtervorrichtung ge- mäß Fig. 1a;
- Fig. 3:: eine noch weiter aufgebrochene perspektivische Ansicht der Filtervorrichtung gemäß Fig. 1a;
- Fig. 4:: eine perspektivische Ansicht eines alternativen Filterelementes ohne Filtermate- rial;
- Fig. 5:: eine perspektivische, teilweise aufgebrochene Ansicht eines erfindungsgemä- ßen Filterelementes mit Filtermaterial;
- Fig. 6a:: eine teilweise aufgebrochene perspektivische Ansicht der Filtervorrichtung ge- mäß Fig. 1a in einer Ausgangsreinigungsstellung;
- Fig. 6b:: eine Ansicht der Kopfseite der teilweise aufgebrochenen Filtervorrichtung ge- mäß Fig. 6a;
- Fig. 7:: die Reinigungsvorrichtung gemäß Fig. 1a in einer teilweise aufgebrochenen An- sicht in einer mittleren Reinigungsstellung;
- Fig. 8:: die Filtervorrichtung gemäß Fig. 1a in einer teilweise aufgebrochenen Ansicht in einer Endreinigungsstellung;
- Fig. 9:: eine alternative erfindungsgemäße Ausführungsform der erfindungsgemäßen Filtervorrichtung;
- Fig. 10a:: ein zylindrisch ausgebildetes erfindungsgemäßes Filterelement ohne Filtermate- rial;
- Fig. 10b:: eine alternative erfindungsgemäße Ausführungsform eines zylindrisch ausgebil- deten Filterelementes ohne Filtermaterial;
- Fig. 11:: das Filterelement gemäß Fig. 10a, teilweise umwickelt mit Filtermaterial;
- Fig. 12:: ein zylindrisch ausgebildetes Filterelement in einer Schnittansicht ohne Filterma- terial;
- Fig. 13:: eine teilweise aufgebrochene perspektivische Ansicht der Filtervorrichtung ge- mäß Fig. 9 zur Erläuterung des Filtervorganges;
- Fig. 14:: eine teilweise aufgebrochene Ansicht der Filtervorrichtung gemäß Fig. 9 zur Verdeutlichung der Vorreinigung; und
- Fig. 15:: die eine teilweise aufgebrochene Ansicht der Filtervorrichtung gemäß Fig. 9 zur Erläuterung der Reinigung derselben.

Zunächst sei vorausgeschickt, dass die in den Figuren gezeigten Merkmale nicht auf die einzelne Ausgestaltung beschränkt sind. Vielmehr sind die jeweils in der Beschreibung einschließlich der Figurenbeschreibung und Zeichnung angegebenen Merkmale zur Weiterbildung miteinander kombinierbar. Insbesondere ist der Gegenstand der vorliegenden Erfindung nicht beschränkt auf die in den Figuren gezeigte Anzahl von in einem Gehäuse angeordneten Filterelementen in der erfindungsgemäßen Filtervorrichtung, oder aber betreffend die Annordnung der Öffnungen zum Durchtritt des gereinigten Filtrates in den Filterelementen.

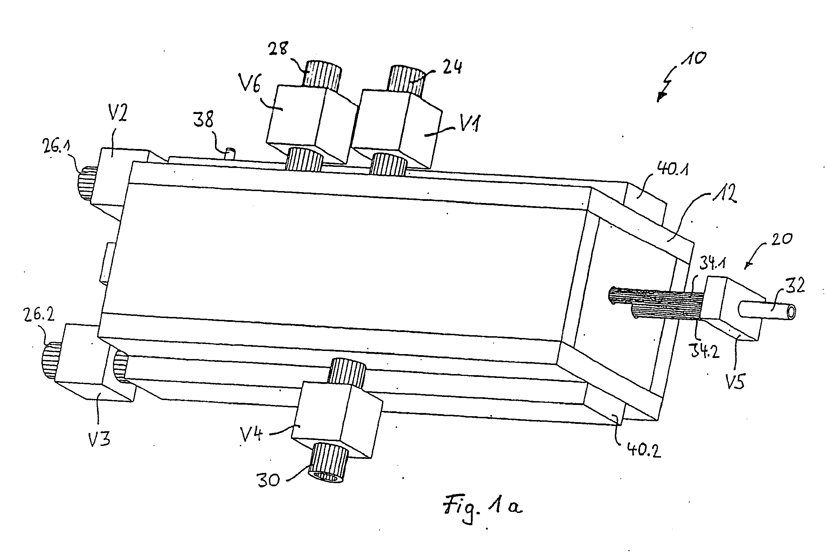

Fig. 1a zeigt eine insgesamt mit einem Bezugszeichen 10 bezeichnete alternative, nicht erfindungsgemäße Filtervorrichtung mit einem Gehäuse 12, welches in etwa quaderförmig ausgebildet ist. Dieses Gehäuse 12 weist einen Einlass 24 mit einem Ventil V1 für die Zufuhr eines zu reinigenden Mediums und entsprechende Auslässe 26.1 und 26.2 mit diesen zugeordneten Ventilen V2 und V3 auf. Des Weiteren weist die Filtervorrichtung 10 einen Einlass 28 mit einem diesen zugeordneten Ventil V6 zum Einlass eines Vorreinigungsmediums auf und einen entsprechend zugeordneten Auslass 30 mit einem diesen zugeordneten Ventil V4. Schließlich wird über eine Zufuhr 32 und einem diesem zugeordneten Ventil V5 ein Reinigungsmedium über Zuführleitungen 34.1 und 34.2 der Filtervorrichtung zugeführt, wobei dieses Reinigungsmedium über den Auslass 30 aus dem Gehäuse 12 der Filtervorrichtung 10 abgelassen werden kann. Des Weiteren ist Fig. 1a ein Drucksensor 38 zu entnehmen, welcher mit einem Filtrataufnahmeelement 40.1 verbunden ist. Das Filtrataufnahmeelement 40.1 ist an einer Längsseite des Gehäuses 12 der Filtervorrichtung 10 angeordnet und diesem entsprechend an der gegenüberliegenden Längsseite des Gehäuses 12 ein weiteres Filtrataufnahmeelement 40.2. Diese Filtrataufnahmeelemente 40 sind mit in der Fig. 1a nicht gezeigten, im Inneren des Gehäuses 12 aufgenommenen Filterelementen verbunden, und weisen einen hier nicht gezeigten Kanal auf, in welchen der Drucksensor 38 eingreift.

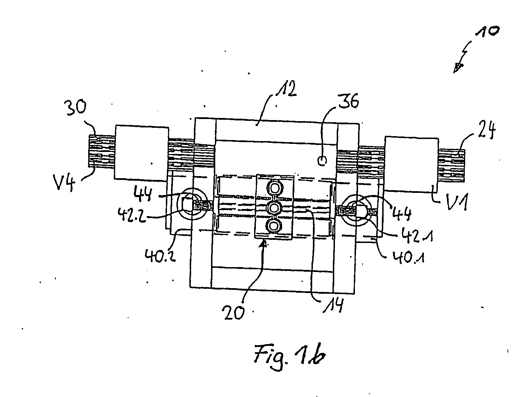

Dieser Aufbau der Filtrataufnahmeelemente 40.1 und 40.2 kann insbesondere der Fig. 1 b entnommen werden. Dort ist die Anordnung eines Filterelementes 14 mit Auslässen 44 auf beiden Stirnseiten desselben zu entnehmen. Das Filterelement 14 ist dabei flächig und blockartig ausgebildet. Die Auslässe 44 enden in den in den Filtrataufnahmeelementen 40.1 und 40.2 angeordneten Filtratkanälen 42.1 und 42.2. Des Weiteren ist Fig. 1b ein weiterer Drucksensor 36 zu entnehmen, welcher den Druck eines in das Gehäuse 12 einströmenden zu reinigenden Mediums, welches über die Zufuhr 24 zugeführt wird, misst. Durch Messung der Druckdifferenz zwischen den Drucksensoren 36 und 38 bei Verschmutzung der Filterelemente 14 und bei Erreichen eines vorgegebenen Sollwertes kann die Zufuhr des zu reinigenden Mediums durch das Ventil V1 gestoppt und nachfolgend der Reinigungsprozess, welcher weiter unten erläutert werden wird, in Gang gesetzt werdein. Der Reinigungsprozess kann grundsätzlich auch mit/ohne bestehende Druckdifferenz im Sinne der vorliegenden Erfindung jederzeit eingeleitet werden.

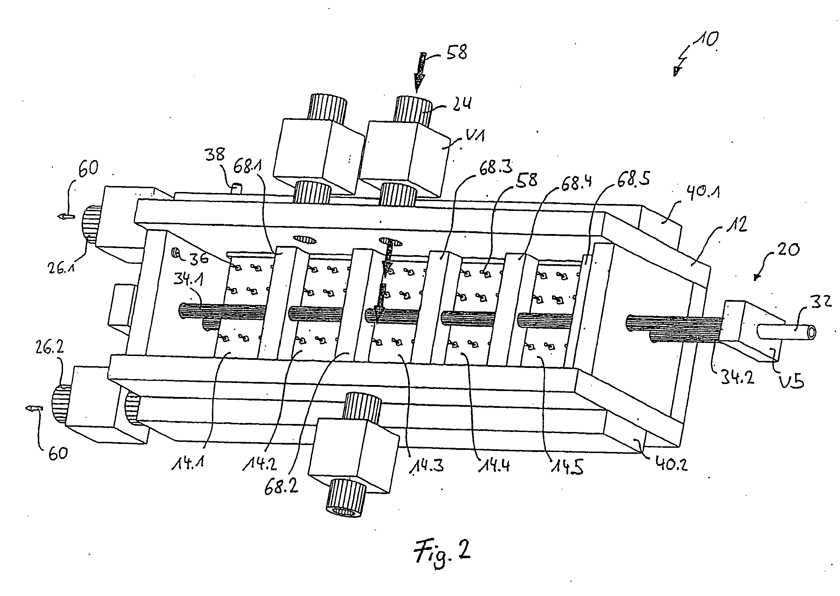

Fig. 2 zeigt in einer teilweise aufgebrochenen perspektivischen Ansicht die Filtervorrichtung 10 gemäß Fig. 1a, wobei deutlich zu erkennen ist die Anordnung von insgesamt fünf Filterelementen 14.1, 14.2, 14.3, 14.4 und 14.5 in einer Reihe als auch die Ausbildung einer Reinigungsvorrichtung 20, welche die Zufuhr 32, das Ventil V5, die Zuführleitungen 34.1 und 34.2 für das Reinigungsmitel sowie an der Zuführleitung 34.1 angeordnete Düsenblöcke 68.1, 68.2, 68.3, 68.4 und 68.5 umfasst. Diese Düsenblöcke sind entsprechend auf der gegenüberliegenden Seite der Filterelemente 14.1 bis 14.5 angeordnet auf der zuführleitung 34.2. Die Düsenblöcke 68 weisen somit eine paarweise Anordnung und Zuordnung zu jeweils einem bestimmten Filterelement 14 auf. Dabei können die Düsenblöcke 68 beispielsweise auch bei reihenweise nebeneinander angeordneten Filterelementen 14 Düsen, ausgerichtet in mehrere Richtungen, aufweisen, so dass ein Düsenblock gleichzeitig mehrere Filterelemente reinigen kann. Die Fliterelemente 14.1 bis 14.5 sind dabei auf beiden Seiten von einem Filtermaterial umgeben, vorzugsweise von einem texturierten Garn bestehend aus einem oder mehreren sehr dünnen Einzelfilamenten, bevorzugt in mehreren Lagen.

Fig. 2 ist die Zufuhr des zu reinigenden Mediums 58, gekennzeichnet durch schwarze Pfeile, über die Zufuhr 24 und das Ventil V1 in das Innere des Gehäuses 12 der Filtervorrichtung 10 zu entnehmen. Das zu reinigende Medium 58 dringt dabei in die Filterelemente 14.1 und 14.5 durch das auf diesem angeordnete Filtermaterial ein, und wird letztendlich über die in den Filteraufnahmeelementen 40.1 und 40.2 angeordneten Kanäle 42.1 und 42.2 den Auslässen 26.1 und 26.2 zugeführt, aus welchen dann das gereinigte Filtrat 60 aus der Filtervorrichtung 10 abgeführt wird.

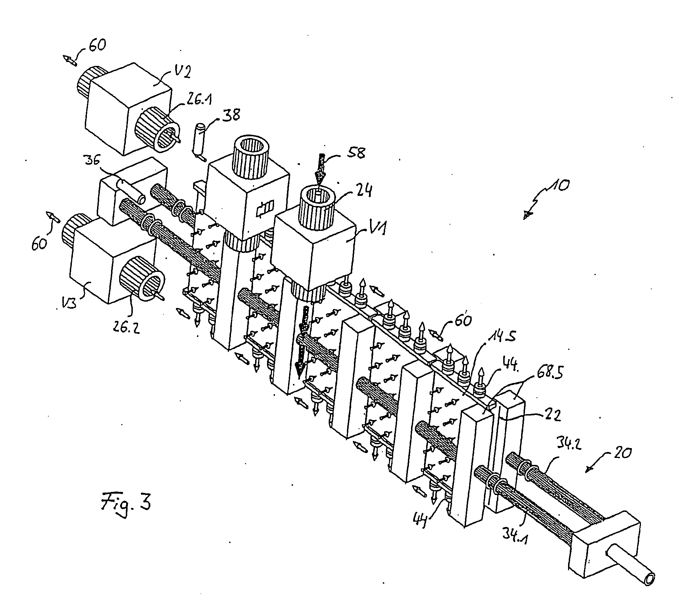

Die paarweise Anordnung dieser Blöcke 68 ist genauer Fig. 3 zu entnehmen, wobei hier im Hinblick auf das Filterelement 14.5 und das Düsenblockpaar 68.5 die Anordnung näher beschrieben sein soll. Die Filterelemente 14.1 bis 14.4 beziehungsweise Düsenblockpaare 68.1 bis 68.4 sind entsprechend ausgebildet. Fig. 3 ist die Anordnung einer Düsenreihe 22 mit einer Vielzahl von festen und/oder beweglichen Düsen, welche senkrecht oder winklig das Reinigungsmedium, bezogen auf die Filterelemente 14, ausgeben, zu entnehmen. Die Blöcke 68.5 sind quaderförmig ausgebildet, und erstrecken sich in ihrer Längsrichtung über die gesamte Fläche des mit einem Flitermaterial umwickelten Bereiches des Filterelementes 14.5.

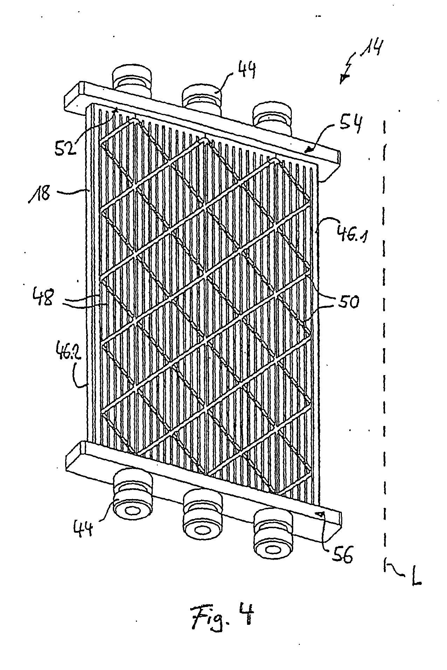

Fig. 4 zeigt ein einzelnes Filterelement 14, ohne Filtermaterial, wie dieses in der Filtervorrichtung gemäß Fig. 1a fünffach aufgenommen ist. Das Filterelement 14 weist in einem Kopfbereich 54 und einem Kopfbereich 56, welche flanschartig ausgebildet sind, angeordnet jeweils drei Auslässe 44 auf, durch welche gereinigtes Filtrat den Kanälen 40.1 und 40.2, anordnet in den Filteraufnahmeelementen 40.1 und 40.2, zugeführt wird. Die Oberflächen 46.1 der Vorderseite und 46.2 der Rückseite des flächigen, blockartigen Filterelementes 14 gemäß der Fig. 4 weisen eine Strukturierung auf, wobei auf diesen jeweils eine Vielzahl parallel zueinander verlaufender länglicher Vertiefungen 48, als Rillen ausgebildet, angeordnet sind, welche durch schräg verlaufende Vertiefungen 50 gekreuzt werden. Diese schräg verlaufenden Vertiefungen 50 sind dabei rautenförmig über die gesamte mit dem Filtermaterial bedeckte Fläche des Filterelementes 14 angeordnet, und schneiden dementsprechend die parallel verlaufenden Vertiefungen 48. Die Vertiefungen 48 und 50 enden jeweils im Kopfbereich 54 beziehungsweise Fußbereich 56. Der Kopfbereich 54 und Fußbereich 56 weisen jeweils eine in der Fig. 4 nicht näher gezeigte schlitzförmige Öffnung 52 auf, welche sich über die gesamte Breite des Filterelementes 14 erstreckt, zur Aufnahme des durch die strukturierte Oberfläche über die Vertiefungen 48 und 50 dieser schlitzartigen Öffnungen 52 zugeleiteten gereinigten Filtrates. Das Abprallelement 18 des Filterelementes 14 ist dabei als massiver Filtergehäusekörper ausgebildet, in der flanschartigen Ausbildung des Kopfbereiches 54 und des Fußbereiches 56 sind entsprechende Hohlräume beziehungsweise Kanäle vorgesehen, über welche das gereinigte Filtrat den Auslässen 44 zugeleitet wird. Die Öffnung 52 kann jedoch auch in jeder anderen Art und Weise ausgebildet sein, insbesondere können auch über die gesamte Fläche des Abprallelementes 18 mehrere Öffnungen 52 verteilt sein. Öffnungen 52 können insbesondere in den Vertiefungen 48 und 50 vorgesehen sein, wobei dann das Abprallelement 58 entweder hohl oder aber mit Kanälen versehen ausgebildet ist, so dass das durch diese Öffnungen aufgenommene Filtrat 60 den Auslässen 44 zugeleitet werden kann.

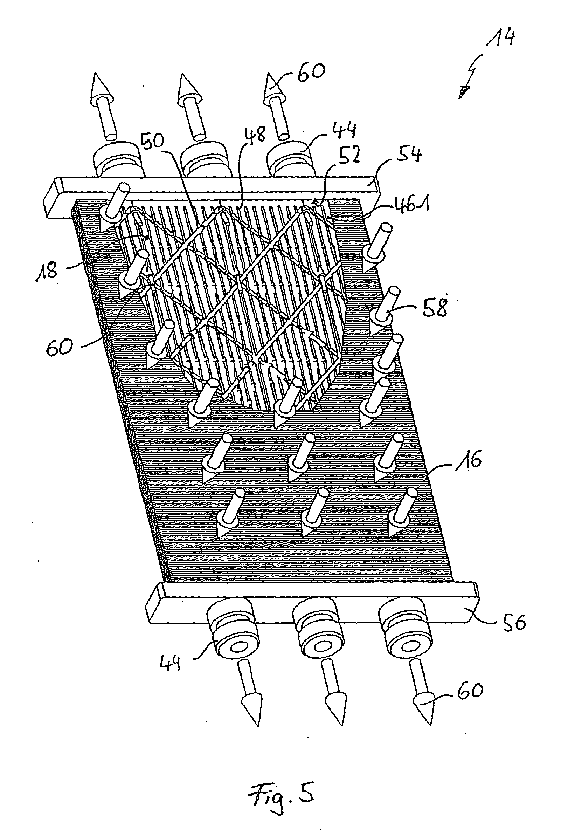

Fig. 5 zeigt nun die Funktionsweise des Filterelementes 14, wobei dort in einer teilweisen aufgebrochenen Ansicht auch das Filtermaterial 16 gut ersichtlich ist. Dieses ist als fasriges Garn ausgebildet und umwickelt den massiven Körper des Abprallelementes 18. Zu reinigendes Medium 58, verdeutlicht durch auf das Filterelement 14 von Außen zustoßende Pfeile) strömt durch das Filtermaterial 16 auf das Filterelement 14 zu, wobei dann das durch kleine Pfeile verdeutlichte gereinigte Filtrat 60 über die Vertiefungen 48 und 50 auf der Oberfläche 46.1, aber auch der dieser gegenüberliegenden Oberfläche 46.2, zu den in dem Kopfbereich 54 und dem Fußbereich 56 angeordneten Öffnungen 52 zugeleitet wird. Dieses solchermaßen von der Oberfläche 46.1 beziehungsweise 46.2 des Abprallelementes 18 abgeleitete Filtrat 60 verlässt durch die Auslässe 44 das Filterelement 14.

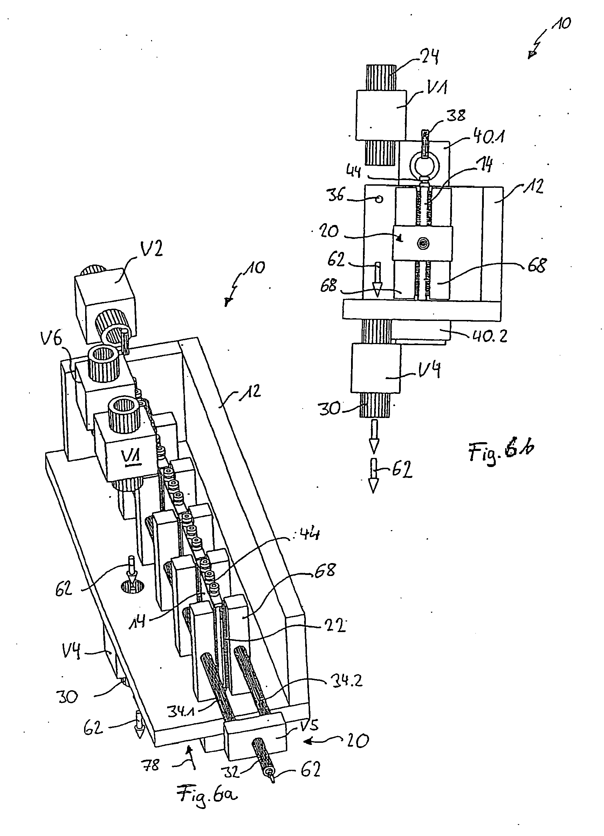

Die Funktionsweise des Reinigungsschrittes der alternativen, nicht erfindungsgemäßen Filtervorrichtung 10 wird anhand der Figuren 6 bis 9 näher erläutert. Fig. 6a zeigt dabei teilweise aufgebrochen die Filtervorrichtung 10 gemäß die Fig. 1a, wobei die Reinigungsvorrichtung 20 in einer Ausgangsstellung angeordnet ist. Die Ventile V1, V2, V3 und V6 sind geschlossen, Ventil V4 und V5 geöffnet. Deutlich lässt sich der Fig. 6a die Düsenreihe 22 des Düsenblocks 68 entnehmen, welcher auf den Zuführleitungen 34.1 und 34.2 paarweise einem jedem Filterelemente 14 zugeordnet ist. Die Reinigungsvorrichtung 20 ist schlittenartig ausgebildet und in Richtung eines Pfeils 78, aber auch selbstverständlich in Gegenrichtung zu Erreichung der Ausgangsposition, bewegbar. Die Blöcke 68 stehen, bezogen auf ein jedes der insgesamt fünf Filterelemente, in einer Ausgangsposition etwas vor der Längsseite der Filterelemente 14. Reinigungsmedium 62 wird durch die Zufuhr 32, geregelt über das Ventil V5, der Filtervorrichtung 10 zugeführt. In dieser Stellung müssen die Ventile V1 bis V3, welche beim eigentlichen Filtervorgang offen sind, geschlossen sein, ebenso Ventil V6, welches der Zufuhr des Vorreinigungsmediums dient. Geöffnet sind lediglich die Ventile V5 und V4. Das mit Schmutz/Filterkuchen versetzte Reinigungsmedium 62 gelangt über das Ventil V4 und den Auslass 30 wieder aus dem Gehäuse 12 der Filtervorrichtung 10 hinaus. Fig. 6b zeigt in einer Seitenansicht den Aufbau und die Stellung der Reinigungsvorrichtung 20 gemäß Fig. 6a, aus welchem im Übrigen auch die Anordnung der Drucksensoren 36 und 38 als auch der Aufbau der Filtrataufnahmeelemente 40 gut ersichtlich ist.

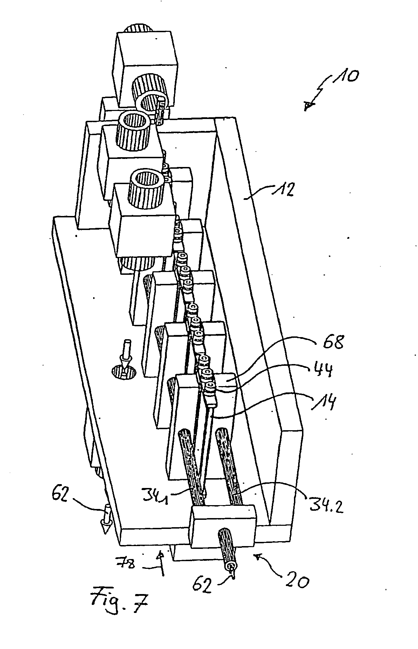

Fig. 7 zeigt nun die Reinigungsvorrichtung 20, bewegt in Richtung des Pfeils 78, in einer mittleren Position, in welcher die auf beiden Seiten des Filterkörpers 14 angeordneten Düsenblöcke 68 etwa die Mitte des Filterelementes 14 auf Höhe des mittleren Auslasses 44 erreicht haben.

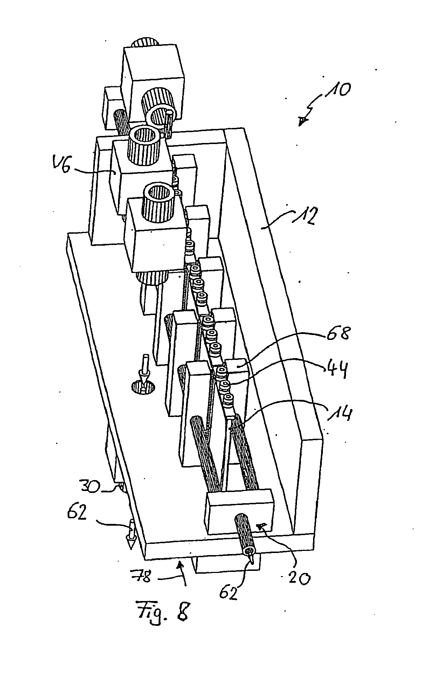

Fig. 8 ist die Endstellung der Reinigungsvorrichtung 20 zu entnehmen, in welcher die Düsenblöcke 68 letztendlich über die gesamte Seitenfläche des Filterelementes 14 hinweggefahren sind und zwischen benachbarten Filterelementen 14 ihre Endstellung einnehmen. Sämtliches Reinigungsmedium 62 wird über den Auslass 30 der Filtervorrichtung 10 entnommen. Gegebenenfalls kann über das Ventil V6 nochmalig Vorreinigungsmedium, insbesondere gasförmig, der Filtervorrichtung 10 zugeführt werden, um Reste des Reinigungsmediums 62 aus der Filtervorrichtung 10 zu entfernen. Die Reinigungsvorrichtung 20 könnte selbstverständlich auch derart ausgebildet sein, dass lediglich ein Düsenblock paar 68 vorgesehen wird, welches über sämtliche fünf in einer Reihe angeordnete Filterelemente 14 verfährt. Allerdings wird durch die Zuordnung von insgesamt fünf Düsenblockpaaren 68 zu einem jedem Filterelement 14 eine erhebliche Beschleunigung der Reinigung erzielt. Nach Beendigung der Reinigung verfährt die Reinigungsvorrichtung 20 wieder in die Ausgangsstellung gemäß Fig. 6a.

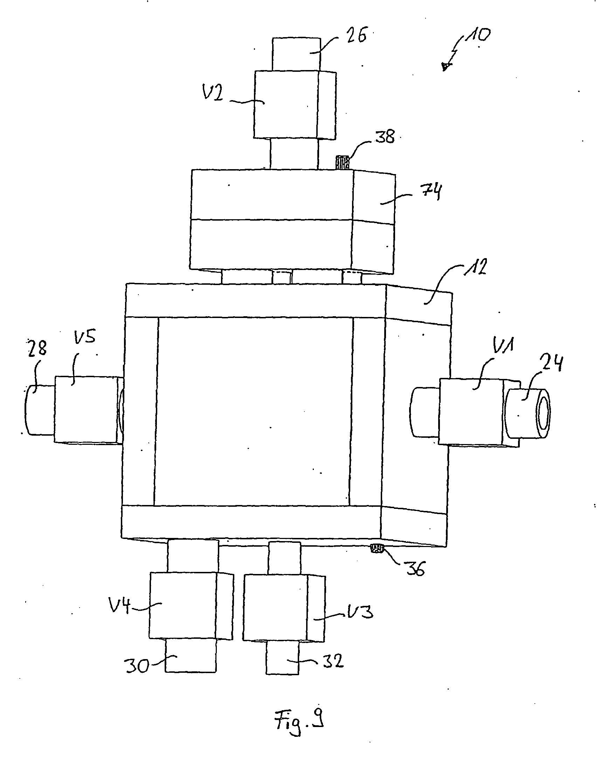

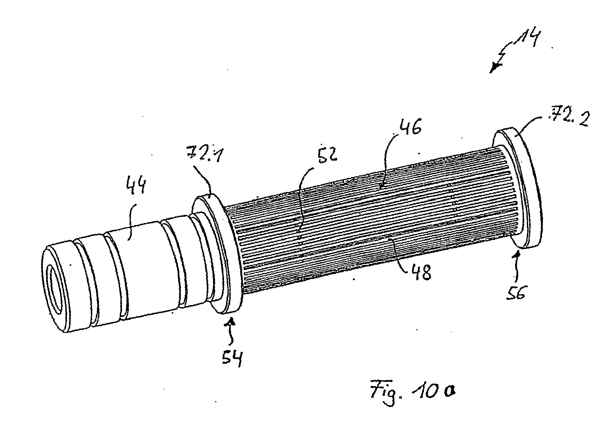

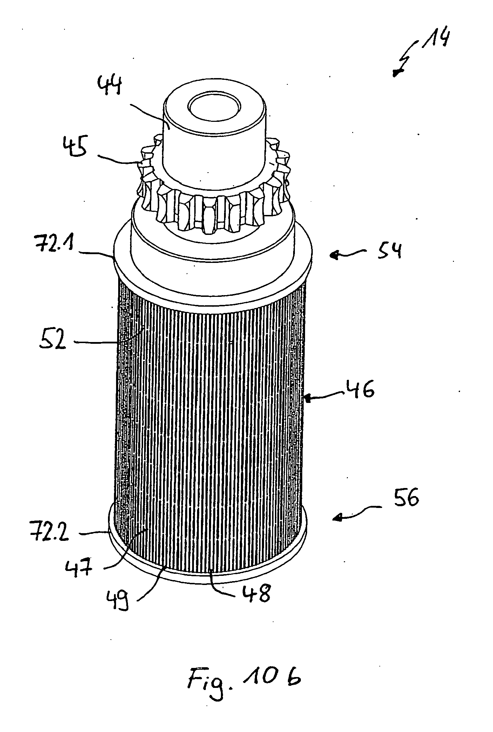

Fig. 9 zeigt nun eine Ausführungsform der erfindungsgemäßen Filtervorrichtung 10, wobei diese im Unterschied zu der in der Fig. 1a Gezeigten keine flächigen Filterelemente 14, sondern wie in den Fig. 10 bis 15 gezeigt, zylindrisch ausgebildete Filterelemente auf weist. Im weiteren Unterschied zu der in der Fig. 1 gezeigt Filtervorrichtung weist die in der Fig. 9 gezeigte erfindungsgemäßeAusführungsform nur einen Auslass 26, versehen mit einem Ventil V2, für das zu reinigende Filtrat vor. Über die Zufuhr 32 und der dieser zugeordnetem Ventil V3 kann Reinigungsmedium der Vorrichtung 10 zugeführt werden, und über den Auslass 30 und dem diesem zugeordneten Ventil V4 wieder entnommen werden. Über den Einlass 28 und das diesem zugeordnete Ventil V5 kann Vorreinigungsmedium der Vorrichtung 10 zugeführt werden. Schließlich weist im Unterschied zu der Filtervorrichtung gemäß Fig. 1a die in der Fig. 9 gezeigte erfindungsgemäße Ausführungsform ein Zusammenführungselement 74 auf, in welchem das aus den insgesamt vier zylindrischen Filterelementen 14 (siehe Fig. 10 bis 15) zu entnehmende gereinigte Filtrat vereinigt und dem Auslass 26 zugeführt wird. Jedoch kann einem jeden zylindrisch ausgewählten Filterelement auch ein eigener Auslass 26 zugeordnet werden.

Fig. 10a ist der Aufbau des zylindrisch ausgebildeten Filterelementes 14, gezeigt ohne Filtermaterial, zu entnehmen. Diese weisen parallel und in Längsrichtung des Filterelementes 14 verlaufende Vertiefungen 48 über der gesamten Umfangsfläche des mit Filtermaterial zu bedeckenden Bereiches des Filterelementes 14 auf, wobei in den Vertiefungen 48 kreisförmig um den Umfang des zylindrischen Filterelementes 14 umlaufend kreisförmige oder eckige Öffnungen 52 angeordnet sind, durch welche gereinigtes Filtrat in das Innere des zylindrischen Filterelementes 14 eintreten kann. Erfindungsgemäß istvorgesehen, dass Öffnungen 52 an einem jedem Ende der jeweiligen Rillen 48 im Kopf- und/oder Fußbereich 54 bzw. 56 angeordnet sind. Ein Kopfbereich 54 weist einen Flansch 72.1 und ein Fußbereich 56 einen Flansch 72.2 auf, mittels welchen das zylindrische Filterelement 14 sicher in der Vorrichtung 10 gemäß Fig. 9 befestigbar ist. Des Weiteren weist das Filterelement 14 einen Auslass 44 für das gereinigte Filtrat auf.

Fig. 10b zeigt eine alternative, erfindungsgemäße Ausführungsform eines zylindrisch ausgebildeten Filterelements 14 zu derjenigen in der Fig. 10a gezeigten, hier wiederum dargestellt ohne Filtermaterial. Das Filterelement 14 weist dabei insbesondere zusätzlich ein Schneckenrad 45 auf, über welches das zylindrisch ausgebildete Filterelement 14 bei Einsatz in eine Filtervorrichtung 10, wie diese beispielsweise in Fig. 9 gezeigt ist, drehbar bewegt werden kann über entsprechend angreifende Getrieberäder, welche hier nicht gezeigt sind. Des Weiteren weist ein Teilbereich einer Oberfläche 46 des Filterelements 14 eine Strukturierung auf mit Vertiefungen 48 und zwischen diesen angeordneten rippenartigen Erhebungen 49. Die Vertiefungen 48 sind dabei ausgehend von einem Flansch 72.1 in einem Kopfbereich 54 des Filterelementes 14 linienförmig verlaufend zu einem zweiten Flansch 72.2 in einem Fußbereich 56 ausgebildet, und entsprechend die Erhebungen 49. Die Erhebungen 49 sind dabei so ausgebildet, dass abwechselnd Erhebungen 49 angeordnet sind, welche Unterbrechungen 47, in Fig. 10b beispielhaft versetzt drei Unterbrechungen 47 je Erhebung 49 beziehungsweise vier Unterbrechungen 47 je Erhebung 49, über die gesamte Länge zwischen Flansch 72.1 und 72.2 aufweisen. Durch diese Unterbrechungen 47 kann dabei Filtrat zwischen benachbart angeordneten rillenartigen Vertiefungen 48 geleitet werden. In den Vertiefungen 48 sind Öffnungen 52 zum Durchtritt des Filtrates 52 in das Innere des Filterelementes 14 angeordnet. Dabei können auch mehrere, beispielsweise sechs, oder eine Vielzahl derartiger Öffnungen 52 verteilt über den gesamten Bereich der strukturierten Oberfläche 46 in Vertiefungen 48 angeordnet sein. Öffnungen 52 können auch im Kopfbereich (Flansch 72.1) und/oder Fußbereich (Flansch 72.2) beispielsweise im Bereich einer Verlängerung mindestens einer Vertiefung 48 angeordnet sein.

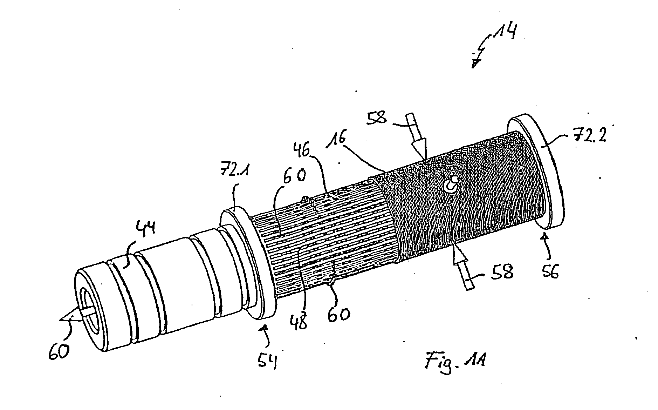

Fig. 11 zeigt das Filterelement gemäß Fig. 10a, nunmehr teilweise umwickelt mit einem Filtermaterial 16 in Form eines texturierten Garnes. Dabei ist durch die Pfeile 58 die Zufuhr eines zu reinigenden Mediums verdeutlicht, welches durch das Filtermaterial 16 eindringt und gereinigt als Filtrat 60, verdeutlicht durch die Pfeile 60, durch die Vertiefungen 48 den Öffnungen 52 zugeführt wird, und schließlich über die Öffnung des Auslasses 44 das zylindrische Filterelement 14 verlässt .

Das Filterelement 14 gemäß den Fig. 10a und 11 ist dabei einseitig offen ausgebildet. Es kann jedoch auch durchaus vorgesehen sein, dass das zylindrisch ausgebildete Filterelement zwei Auslässe 44, angeordnet an den entgegengesetzten Kopfbereichen 54 und Fußbereichen 56, aufweist, so dass gereinigtes Filtrat 60 das Filterelement 14 an beiden Stirnseiten verlassen kann.

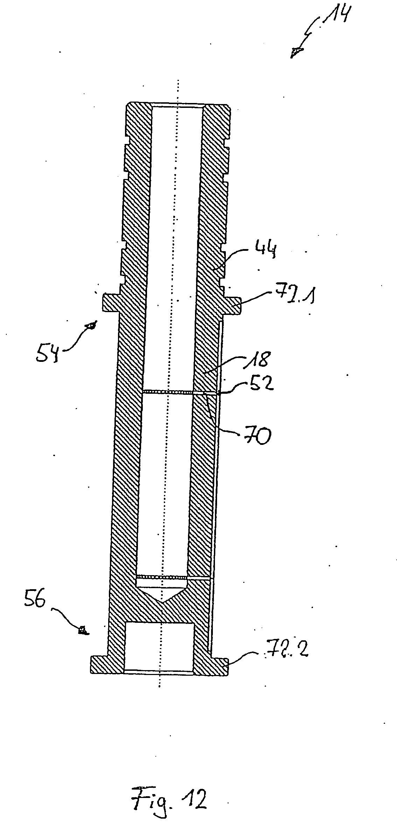

Fig. 12 zeigt das zylindrische Filterelement 14 gemäß den Fig. 10a und 11 in einer Schnittansicht, wobei besonders gut die Öffnungen 52 mit den diesen zugeordneten Öff nungskanälen 70 ersichtlich sind. Das Abprallelement 18 besteht dabei aus einem hohlen Körper, gebildet aus einem Metall und/oder Kunststoffmaterial. Im Fußbereich 56 ist das Filterelement 14 verschlossen, und am Kopfbereich 54 angeordnet in Verbindung zu dem dortigen Flansch 72.1 ist der Auslass 44.

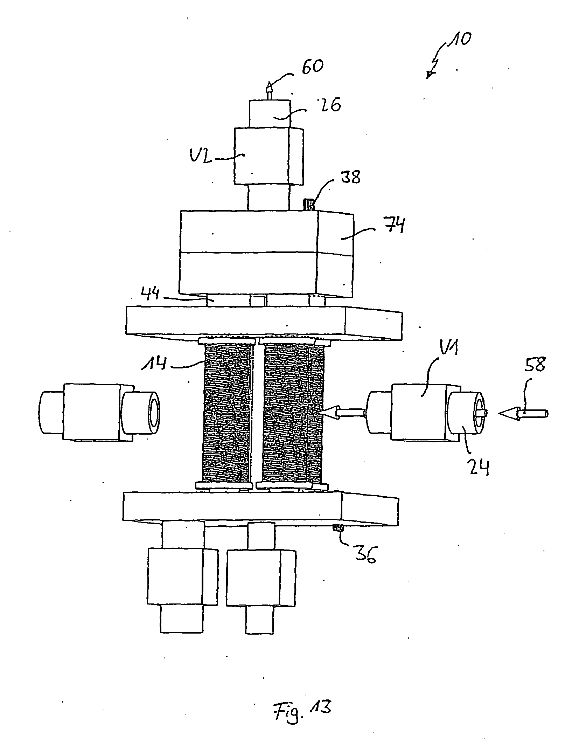

Die Fig. 13 bis 15 zeigen nun die einzelnen Filtrier-, Vorreinigungs- und Reinigungsschritte, wobei der Filtrier- und der Vorreinigungsschritt entsprechend mit der in der Fig. 1a gezeigten Vorrichtung durchgeführt werden. Zu reinigendes Medium 58 tritt durch den Einlass 24, geregelt über das Ventil V1, in das Innere der Filtervorrichtung 10 ein, durchdringt das Filtermaterial der insgesamt vier auf einer in etwa quadratischen Grundfläche zueinander angeordneten Filterelemente 14, wird über die in der Fig. 13 nicht näher gezeigten Öffnungen 52 (siehe Fig. 10 bis 12) als gereinigtes Filtrat in das Innere der Filterelemente 14 überführt, das Filtrat 60 schließlich im Zusammenführungselement 74 vereinigt und über den gemeinsamen Auslass 26 nachfolgend dem Ventil V2 der Vorrichtung 10 entnommen. Wird nun der durch die Drucksensoren 36 und 38 gemessene Druckunterschied so groß, dass ein vorgegebener Sollwert überschritten wird, werden die Ventile V1 und V2 geschlossen, und die Vorreinigung beziehungsweise Reinigung der Vorrichtung 10 wird in Gang gesetzt, allerdings kann der Vorgang auch jederzeit mit/ohne bestehenden Druckunterschied eingeleitet werden. Selbstverständlich können auch mehr oder weniger als vier Filterelemente 14 vorgesehen sein.

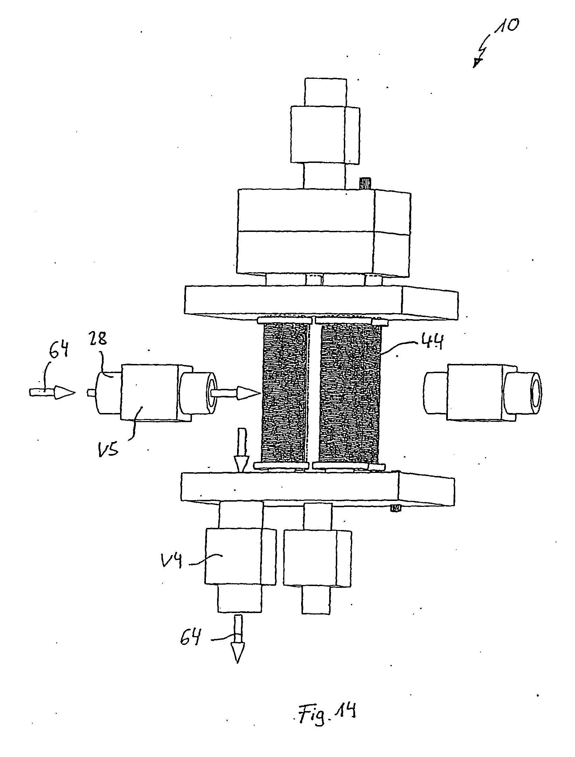

Fig. 14 zeigt den Vorreinigungsschritt, wobei ein Vorreinigungsmedium 64 über die Zufuhr 28, geregelt über das Ventil V5, der Vorrichtung 10 zugeführt wird, vorzugsweisegasför mig und unter Druck stehend, wodurch noch sich im Inneren der Vorrichtung 10 befindliches Filtrat 60 oder zu reinigendes Medium 58 über den Auslass 64, geregelt durch das Ventil V4, aus der Vorrichtung 10 hinausgeführt wird. Nach einem vorgegebenen Zeitraum wir dann die Zufuhr des Vorreinigungsmediums 64 durch Schließen des Ventils V5 unterbunden, und die eigentliche Reinigung wird in Gang gesetzt.

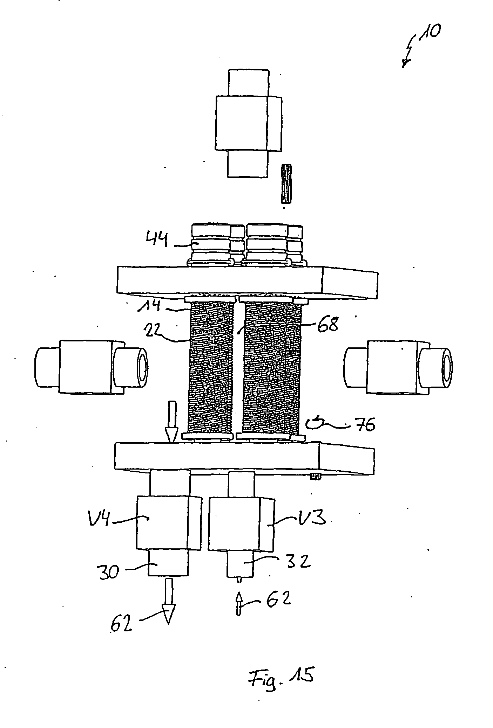

Fig. 15 zeigt die Reinigung der Vorrichtung 10, wobei Reinigungsmedium 62 über die Zufuhr 32, geregelt über das Ventil V3, einem Düsenblock 68 mit Düsenreihen 22 zugeführt wird. Der Düsenblock 68 ist dabei zylinderförmig ausgebildet, und weist zumindest eine einem jeden der vier Filterelemente 14 zugeordnete Düsenreihe 22, insgesamt also mindestens vier, auf. Die einzelnen Düsen der Düsenreihe 22 können dabei das Reinigungsmedium 62 senkrecht und/oder winklig auf die Oberfläche der Filterelemente 14 aufgeben. Das Reinigungsmedium 62 durchdringt das Filtermaterial der Filterkörper 14, wird auf dem Filtergehäuse, welches dem Abprallelement 18 entspricht, reflektiert, dringt wiederum durch das Filtermaterial der Filterelemente 14 hindurch und wird nachfolgend Ober den Auslass 30, geregelt Ober das Ventil V4 aus der Vorrichtung 10 wieder abgeführt. Dabei ist vorgesehen, dass der Düsenblock 68 feststehend ausgebildet ist, und die Filterelemente 14 bewegbar, was durch den Pfeil 76 verdeutlicht ist. Die Filterkörper 14 rotieren dabei um ihre Hauptachse, so dass die gesamte Oberfläche der Filterelemente 14 durch das aus der Düsenreihe 22 austretende Reinigungsmedium 62 gleichmäßig durch-drungen wird, und das Reinigungsmedium 62 auch entsprechend auf dem Filtergehäuse 18 der Filterelemente 14 vom Abprallelement 18 (Gehäuse) reflektiert werden kann und wiederum das Filtermaterial der Filterelemente 16 durchdringt. Nach einer vorgegebenen Zeitspanne wird dann die Rotation der Filterkörper 14 eingestellt, das Ventil V3 und das Ventil V4 geschlossen. Dann steht die Vorrichtung 10 erneut zur Reinigung eines zu reinigenden Mediums 58 zur Verfügung. Gegebenenfalls kann vor Zufuhr des zu reinigenden Mediums 58 (siehe Fig. 13) nochmalig Vorreinigungsmedium, insbesondere gasförmiges oder flüssiges, gemäß Fig. 14 aufgegeben werden, um Reste des Reinigungsmediums 62 aus der Vorrichtung 10 zu verdrängen.

Der vorstehend anhand der Fig. 13 bis 15 und der Beschreibung beschriebene Arbeitsweise der erfindungsgemäßen Vorrichtung wird dann in einem neuen Zyklus fortgesetzt.

Durch die erfindungsgemäße Filtervorrichtung, das erfindungsgemäße Filterelement und die erfindungsgemäßen Verfahren wird eine effektive Filtration von zu reinigenden Medien, gleich ob flüssig und/oder gasförmig, sowie eine effektive Reinigung durch die Vorsehung von Abprallelementen erzielt.

## Patentansprüche

1. Filtervorrichtung (10) mit einem Gehäuse (12) mit mindestens einem in diesem angeordneten zylindrischen Filterelement (14), umfassend mindestens ein Filtermaterial (16) ausgewählt aus einer Gruppe umfassend Vliese, Fasern, Gewebe und/oder Garne und mindestens ein durch ein Filtergehäuse gebildetes Abprallelement (18) mit einer strukturierten Oberfläche (46) mit mindestens zwei, in Richtung einer Längsachse L des Abprallelementes (18) gesehen, zueinander parallel verlaufenden, ausgehend von einem Flansch:(72.1) in einem Kopfbereich (54) des Filterelementes (14) zu einem zweiten Flansch (72.2) in einem Fußbereich (56) verlaufend ausgebildeten und kurz vor beziehungsweise am Kopf und/oder Fußbereich (54, 56) des Abprallelementes (18) endenden Vertiefungen (48), wobei das Filtergehäuse Öffnungen aufweist, durch welche das Filtrat in das Innere des Filtergehöuses eintreten konn, wobei das Filtergehäuse mit dem mindestens einen Filtermaterial (16) zumindest teilweise umgeben ist, und mit einer Reinigungsvorrichtung (20), umfassend mindestens eine Düse (22), welche zur Entfernung eines Filterkuchens auf dem Filtermaterial (16) mittels eines Reinigungsmediums (62) senkrecht und/oder winklig, bezogen auf das Filterelement (14), ausrichtbar ist, wobei zur Reinigung das Reinigungsmedium (62) das Filtermaterial (16) zumindest teilweise durchdringt, und das Abprallelement (18) das Reinigungsmedium (62) zumindest teilweise ablenkt zum erneuten Durchtritt durch das Filtermaterial (16) bei gleichzeitig zumindest teilweiser Entfernung des Filterkuchens, **dadurch gekennzeichnet, dass** die. Öffnungen (52) im durch den Flansch (72.1) und den zweiten Flansch (72.2) gebildeten Kopf- und/oder Fußbereich (54, 56) auf der Oberfläche des Abprallelementes (18) im Bereich einer Verlängerung mindestens einer der Vertiefungen (48) angeordnet sind.

2. Filtervorrichtung gemäß Anspruch 1, **dadurch gekennzeichnet, dass** die Oberflächenstruktur mindestens eine schräg zu der Längsachse L des Abprallelementes (18) verlaufende Vertiefung (50) aufweist.

3. Filtervorrichtung gemäß einem der vorgehenden Ansprüche, **dadurch gekennzeichnet, dass** jedem einzelnen im Gehäuse (12) aufgenommenen Filterelement (14) mindestens eine Düse (22) zugeordnet ist.

4. Filtervorrichtung gemäß einem der vorhergehenden Ansprüche, **dadurch gekennzeichnet, dass** das Filterelement (14) bewegbar ausgebildet ist.

5. Filtervorrichtung gemäß einem der vorhergehenden Ansprüche, **dadurch gekennzeichnet, dass** die Düse (22) in einem Winkel von 5 Grad bis 85 Grad, bezogen auf die Oberfläche (46) des Abprallelementes (18) ausgebildet ist.

6. Zylindrisches Filterelement (14), umfassend mindestens ein durch ein Filtergehäuse gebildetes Abprallelement (18) und mindestens ein Filtermaterial (16) ausgewählt aus einer Gruppe umfassend Vliese, Fasern. Gewebe und/oder Garne, wobei das Abprallelement (18) eine zumindest teilweise strukturierte Oberfläche (46) mit mindestens zwei, in Richtung einer Längsachse L des Abprallelementes 18 gesehen, zueinander parallel verlaufenden, ausgehend von einem Flansch (72.1) in einem Kopfbereich (54) des Filterelementes (14) zu einem zweiten Flansch (72.2) in einem Fußbereich (56) verlaufend ausgebildeten und kurz vor beziehungsweise am Kopf- und/oderFußbereich (54, 56) des Abprallelementes (18) endenden Vertiefungen (48) aufweist, wobei das Filtergehäure öffnungen aufweist, durch welche das Filtrat in das Innere des Filtergehäuses eintreten kann, **dadurch gekennzeichnet, dass** die Öffnungen (52) im durch den Flansch (72.1) und den zweiten Flansch (72.2) gebildeten Kopf- und/oder Fußbereich (54, 56) auf der Oberfläche des Abprallelementes (18) im Bereich einer Verlängerung mindestens einer der Vertiefungen (48) angeordnet sind.

7. Filterelement gemäß Aspruch 6, **dadurch gekennzeichnet, dass** das Abprallelement (18) durch ein Filtergehäuse gebildet ist, welches mit dem mindestens einen Filtermaterial (16) umgeben ist.

8. Filterelement gemäß einem der Ansprüche 6 bis 7, **dadurch gekennzeichnet, dass** die Oberflächenstruktur mindestens eine schräg zu der Längsachse L des Abprallelementes (18) verlaufende Vertiefung (50) aufweist.

9. Verfahren zur Reinigung eines Mediums (58), **dadurch gekennzeichnet, dass** das zu reinigende Medium (58) zumindest teilweise durch mindestens ein Filterelement (14) gemäß einem der Ansprüche 6 bis 8 gereinigt wird.

10. Verfahren zur Entfernung eines auf mindestens einem zylindrischen Filterelement (14), gemäß einem der Ansprüche 6 bis 8, abgesetzten Filterkuchens in einer Filtervorrichtung (10), wobei über mindestens eine Düse (22) einer Reinigungsvorrichtung (20) ein Reinigungsmedium (62) senkrecht und/oder winklig, bezogen auf eine Oberfläche (46) des Abprallelementes (18), auf das Filterelement gerichtet wird, das Reinigungsmedium (62) das Filtermaterial (16) durchdringt, auf dem Abprallelement (18) zumindest teilweise abprallt und bei erneutem Durchtritt durch das Filtermaterial (16) der Filterkuchen zumindest teilweise entfernt wird und ein erhaltenes Filtrat über im durch einen Flansch (72.1) und einen zweiten Flansch (72.2) gebildeten Kopf und/oder Fußbereich (54, 56) auf der Oberfläche des Abprallelementes (18) im Bereich einer Verlängerung mindestens einer der Vertiefungen (48) angeordneten Öffnungen (52) in ein Inneres des Filterelementes (14) eintritt.

11. Verfahren gemäß Anspruch 10. **dadurch gekennzeichnet, dass** die Reinigungsvorrichtung (20) bei Abgabe des Reinigungsmediums (62) bewegt wird.

12. Verfahren gemäß einem der Ansprüche 10 oder 11, **dadurch gekennzeichnet, dass** mindestens ein Filterelement (14) bei Abgabe des Reinigungsmediums (62) bewegt wird.

13. Verfahren gemäß einem der Ansprüche 10 bis 12, **dadurch gekennzeichnet, dass** die Entfernung des Filterkuchens durch ein flüssiges und/oder gasförmiges Reinigungsmedium (62) erfolgt.

14. Verfahren gemäß einem der Ansprüche 10 bis 13, **dadurch gekennzeichnet, dass** vor der Zufuhr des Reinigungsmediums (62) durch ein Vorreinigungsmedium (64) das im Gehäuse (12) der Filtervorrichtung (10) anstehende restliche zu reinigende Medium (58) ausgespült wird

15. verfahren gemäß einem der Ansprüche 10 bis 14, **dadurch gekennzeichnet, dass** nach dem Reinigungsprozess durch ein Nachreinigungsmedium das im Gehäuse (12) der Filtervorrichtung (10) anstehende restliche verschmutzte, vom Reinigungsprozess zurückgebliebene Medium (58) ausgespült wird.

16. Verfahren gemäß einem der Ansprüche 10 bis 15, **dadurch gekennzeichnet, dass** das Reinigungsmedium (62) in Form eines Gases und/oder Gasgemisches eingesetzt wird.

17. Verfahren gemäß einem der Ansprüche 10 bis 16, **dadurch gekennzeichnet, dass** das Reinigungsmedium (62) über die mindestens eine Düse (22) mit einem Druck von mindestens etwas 3 bar aufgegeben wird.

18. Verfahren gemäß einem der Ansprüche 10 bis 17, **dadurch gekennzeichnet, dass** bei Verwendung eines garnförmigen Filtermateriales (16) das Reinigungsmedium (62) parallel zur Wicklungsrichtung des Garnes aufgegeben wird.

19. Verfahren gemäß einem der Ansprüche 10 bis 18, **dadurch gekennzeichnet, dass** die Abprallwirkung und/oder der Abfluss des Reinigungsmediums (62) durch das Abprallelement (18) erhöht wird durch eine Strukturierung der Oberfläche (46) desselben.

## Claims

1. A filtering device (10) with a housing (12) with at least one cylindrical filter element (14) that is arranged in the housing, comprising at least one filter material (16) chosen from a group comprising nonwovens, fibres, fabrics and/or yarns and at least one rebound element (18), formed by a filter housing, with a structured surface (46) with at least two mutually parallel, viewed in the direction of a longitudinal axis L of the rebound element (18), recesses (48), formed extending starting from a flange (72.1) in a head region (54) of the filter element (14) to a second flange (72.2) in a foot region (56) and ending shortly before or on the head region and/or foot region (54, 56) of the rebound element (18), where the filter housing has openings through which the filtrate can enter into the interior of the filter housing, where the filter housing is enclosed at least partially with the at least one filter material (16), and with a cleaning device (20), comprising at least one nozzle (22), which can be directed, for the removal of a filter cake on the filter material (16) by means of a cleaning medium (62), perpendicularly and/or angularly in relation to the filter element (14), where, for cleaning, the cleaning medium (62) penetrates through the filter material (16) at least partially, and the rebound element (18) deflects the cleaning medium (62) at least partially for a renewed passage through the filter material (16) with at least partial removal of the filter cake at the same time, **characterised in that** the openings (52) are arranged on the surface of the rebound element (18) in the head region and/or foot region (54, 56) formed by the flange (72.1) and the second flange (72.2) in the region of an extension of at least one of the recesses (48).

2. A filtering device according to Claim 1, **characterised in that** the surface structure presents at least one recess (50) that runs obliquely to the longitudinal axis L of the rebound element (18).

3. A filtering device according to one of the preceding claims, **characterised in that** at least one nozzle (22) is associated with each individual filter element (14) accommodated in the housing (12).

4. A filtering device according to one of the preceding claims, **characterised in that** the filter element (14) is designed to be moveable.

5. A filtering device according to one of the preceding claims, **characterised in that** the nozzle (22) is designed at an angle of 5 to 85 degrees, with respect to the surface (46) of the rebound element (18).

6. A cylindrical filter element (14), comprising at least one rebound element (18) formed by a filter housing and at least one filter material (16) chosen from a group comprising nonwovens, fibres, fabrics and/or yarns, wherein the rebound element (18) presents an at least partially structured surface (46) with at least two mutually parallel, viewed in the direction of a longitudinal axis L of the rebound element (18), recesses (48), formed extending starting from a flange (72.1) in a head region (54) of the filter element (14) to a second flange (72.2) in a foot region (56) and ending shortly before or on the head region and/or foot region (54, 56) of the rebound element (18), where the filter housing has openings through which the filtrate can enter into the interior of the filter housing, **characterised in that** the openings (52) are arranged on the surface of the rebound element (18) in the head region and/or foot region (54, 56) formed by the flange (72.1) and the second flange (72.2) in the region of an extension of at least one of the recesses (48).

7. A filter element according to Claim 6, **characterised in that** the rebound element (18) is formed by a filter housing which is enclosed with the at least one filter material (16).

8. A filter element according to one of Claims 6 to 7, **characterised in that** the surface structure presents at least one recess (50) that runs obliquely to the longitudinal axis L of the rebound element (18).

9. A method for cleaning a medium (58), **characterised in that** the medium (58) to be cleaned is cleaned at least partially by at least one filter element (14) according to one of Claims 6 to 8.

10. A method for removing a filter cake that has become deposited on at least one cylindrical filter element (14), according to one of Claims 6 to 8, in a filtering device (10), where, via at least one nozzle (22) of a cleaning device (20), a cleaning medium (62) is directed perpendicularly and/or angularly in relation to a surface (46) of the rebound element (18) onto the filter element, the cleaning medium (62) penetrates through the filter material (16), rebounds at least partially on the rebound element (18), and the filter cake is removed at least partially during the renewed passage through the filter material (16), and a resulting filtrate enters an interior of the filter element (14) via openings (52) arranged in the head region and/or foot region (54, 56) formed by a flange (72.1) and a second flange (72.2) on the surface of the rebound element (18) in the region of an extension of at least one of the recesses (48).

11. A method according to Claim 10, **characterised in that** the cleaning device (20) is moved during the release of the cleaning medium (62).

12. A method according to one of Claims 10 or 11, **characterised in that** at least one filter element (14) is moved during the release of the cleaning medium (62).

13. A method according to one of Claims 10 to 12, **characterised in that** the removal of the filter cake occurs by means of a liquid and/or gaseous cleaning medium (62).

14. A method according to one of Claims 10 to 13, **characterised in that**, before feeding the cleaning medium (62), the remaining medium (58) to be cleaned that is present in the housing (12) of the filtering device (10) is rinsed out by means of a preliminary cleaning medium (64).

15. A method according to one of Claims 10 to 14, **characterised in that** after the cleaning process, the remaining soiled medium (58) that has been left over from the cleaning process and is present in the housing (12) of the filtering device (10) is rinsed out by means of a post cleaning medium.

16. A method according to one of Claims 10 to 15, **characterised in that** the cleaning medium (62) is used in the form of a gas and/or gas mixture.

17. A method according to one of Claims 10 to 16, **characterised in that** the cleaning medium (62) is applied via the at least one nozzle (22) at a pressure of at least approximately 3 bar.

18. A method according to one of Claims 10 to 17, **characterised in that** when using a yam-shaped filter material (16) the cleaning medium (62) is fed parallel to the winding direction of the yarn.

19. A method according to one of Claims 10 to 18, **characterised in that** the rebound effect and/or the outflow of the cleaning medium (62) through the rebound element (18) is increased by a structuring of the surface (46) of same.

## Revendications

1. Dispositif de filtre (10) doté d'un boîtier (12) présentant au moins un élément filtrant (14) cylindrique, disposé dans ce boîtier, comprenant au moins un matériau filtrant (16) sélectionné dans un groupe comprenant des non-tissés, des fibres, des tissus et/ou des fils et au moins un élément de rebondissement (18) formé par un boîtier de filtre et pourvu d'une surface (46) structurée avec au moins deux cavités (48) agencées parallèlement entre elles, vues dans le sens d'un axe longitudinal L de l'élément de rebondissement (18), conçues en partant d'une bride (72.1) dans une zone supérieure (54) de l'élément filtrant (14) et en allant vers une seconde bride (72.2) dans une zone inférieure (56), et se terminant juste avant ou sur la zone supérieure et/ou la zone inférieure (54, 56) de l'élément de rebondissement (18), le boîtier de filtre présentant des ouvertures par lesquelles le filtrat peut entrer à l'intérieur du boîtier de filtre, le boîtier de filtre étant entouré au moins partiellement avec le au moins un matériau filtrant (16), et doté d'un dispositif de nettoyage (20), comprenant au moins une buse (22), qui peut être orientée perpendiculairement et/ou en angle, par rapport à l'élément filtrant (14), pour l'enlèvement d'un gâteau de filtre sur le matériau filtrant (16) au moyen d'un agent de nettoyage (62), l'agent de nettoyage (62) traversant au moins partiellement le matériau filtrant (16) pour le nettoyage et l'élément de rebondissement (18) déviant au moins partiellement l'agent de nettoyage (62) pour un nouveau passage dans le matériau filtrant (16) avec un enlèvement simultané et au moins partiel du gâteau de filtre, **caractérisé en ce que** les ouvertures (52) sont disposées dans la zone supérieure et/ou la zone inférieure (54, 56) formée par la bride (72.1) et la seconde bride (72.2) sur la surface de l'élément de rebondissement (18) dans la zone d'un prolongement d'au moins l'une des cavités (48).

2. Dispositif de filtre selon la revendication 1, **caractérisé en ce que** la structure de surface présente au moins une cavité (50) agencée en biais par rapport à l'axe longitudinal L de l'élément de rebondissement (18).

3. Dispositif de filtre selon l'une quelconque des revendications précédentes, **caractérisé en ce qu'**au moins une buse (22) est attribuée à chaque élément filtrant (14) individuel réceptionné dans le boîtier (12).

4. Dispositif de filtre selon l'une quelconque des revendications précédentes, **caractérisé en ce que** l'élément filtrant (14) est conçu mobile.

5. Dispositif de filtre selon l'une quelconque des revendications précédentes, **caractérisé en ce que** la buse (22) est conçue dans un angle de 5 degrés à 85 degrés par rapport à la surface (46) de l'élément de rebondissement (18).

6. Elément filtrant (14) cylindrique, comprenant au moins un élément de rebondissement (18) formé par un boîtier de filtre et au moins un matériau filtrant (16) sélectionné dans un groupe comprenant des non-tissés, des fibres, des tissus et/ou des fils, l'élément de rebondissement (18) présentant une surface (46) structurée au moins partiellement, dotée d'au moins deux cavités (48) agencées en parallèle, vues en direction d'un axe longitudinal L de l'élément de rebondissement 18, conçues à partir d'une bride (72.1) dans une zone supérieure (54) de l'élément filtrant (14) vers une seconde bride (72.2) dans une zone inférieure (56) et se terminant juste devant ou sur la zone supérieure et/ou la zone inférieure (54, 56) de l'élément de rebondissement (18), le boîtier de filtre présentant des ouvertures par lesquelles le filtrat peut entrer à l'intérieur du boîtier de filtre, **caractérisé en ce que** les ouvertures (52) sont disposées dans la zone supérieure et/ou la zone inférieure (54, 56) formée(s) par la bride (72.1) et la seconde bride (72.2) sur la surface de l'élément de rebondissement (18) dans la zone d'un prolongement d'au moins une des cavités (48).

7. Elément filtrant selon la revendication 6, **caractérisé en ce que** l'élément de rebondissement (18) est formé par un boîtier de filtre qui est entouré avec le au moins un matériau filtrant (16).

8. Elément filtrant selon l'une quelconque des revendications 6 à 7, **caractérisé en ce que** la structure de surface présente au moins une cavité (50) agencée en biais par rapport à l'axe longitudinal L de l'élément de rebondissement (18).

9. Procédé pour le nettoyage d'un fluide (58), **caractérisé en ce que** le fluide (58) à nettoyer est nettoyé au moins partiellement par au moins un élément filtrant (14) selon l'une quelconque des revendications 6 à 8.

10. Procédé pour enlever un gâteau de filtre déposé sur au moins un élément filtrant (14) cylindrique, selon l'une quelconque des revendications 6 à 8, dans un dispositif de filtre (10), un agent de nettoyage (62) étant orienté perpendiculairement et/ou en angle, par rapport à une surface (46) de l'élément de rebondissement (18), sur l'élément filtrant, au moyen d'au moins une buse (22) d'un dispositif de nettoyage (20), le fluide de nettoyage (62) traversant le matériau filtrant (16), rebondissant au moins partiellement sur l'élément de rebondissement (18) et le gâteau de filtre étant enlevé au moins partiellement lors d'un nouveau passage à travers le matériau filtrant (16) et un filtrat obtenu entrant par des ouvertures (52), disposées dans la zone supérieure et/ou la zone inférieure (54, 56), formées par une bride (72.1) et une seconde bride (72.2), sur la surface de l'élément de rebondissement (18) dans la zone d'un prolongement d'au moins l'une des cavités (48), dans un espace intérieur de l'élément filtrant (14).

11. Procédé selon la revendication 10, **caractérisé en ce que** le dispositif de nettoyage (20) est déplacé en cas de distribution du fluide de nettoyage (62).

12. Procédé selon l'une quelconque des revendications 10 ou 11, **caractérisé en ce qu'**au moins un élément filtrant (14) est déplacé en cas de distribution du fluide de nettoyage (62).

13. Procédé selon l'une quelconque des revendications 10 à 12, **caractérisé en ce que** l'enlèvement du gâteau de filtre s'effectue par un fluide de nettoyage (62) liquide et/ou gazeux.

14. Procédé selon l'une quelconque des revendications 10 à 13, **caractérisé en ce que** le fluide (58) restant à nettoyer, se formant dans le boîtier (12) du dispositif de filtre (10), est expulsé avant l'arrivée du fluide de nettoyage (62) par un fluide de prénettoyage (64).

15. Procédé selon l'une quelconque des revendications 10 à 14, **caractérisé en ce que** le fluide (58) encrassé restant, se trouvant dans le boîtier (12) du dispositif de filtre (10), retenu par le processus de nettoyage est expulsé après le processus de nettoyage par un fluide de post-nettoyage.

16. Procédé selon l'une quelconque des revendications 10 à 15, **caractérisé en ce que** le fluide de nettoyage (62) est utilisé sous la forme d'un gaz et/ ou d'un mélange de gaz.

17. Procédé selon l'une quelconque des revendications 10 à 16, **caractérisé en ce que** le fluide de nettoyage (62) est délivré par la au moins une buse (22) avec une pression d'au moins environ 3 bars.

18. Procédé selon l'une quelconque des revendications 10 à 17, **caractérisé en ce que**, si l'on utilise un matériau filtrant (16) en forme de fil, le fluide de nettoyage (62) est délivré parallèlement au sens d'enroulement du fil.

19. Procédé selon l'une quelconque des revendications 10 à 18, **caractérisé en ce que** l'effet de rebondissement et/ou l'écoulement du fluide de nettoyage (62) dans l'élément de rebondissement (18) est augmenté par une structuration de la surface (46).
